# EUROPEAN PATENT APPLICATION

(11) **EP 4 811 530 A1**
(43) Date of publication of application: **23.09.2026**
(21) Application number: 25833576.9
(22) Date of filing: 01.07.2025
(51) Int. Cl.: H01M 50/538, H01M 50/533, H01M 10/04, H01M 50/213, H01M 50/249

(54) **BATTERY, BATTERY PACK, AND VEHICLE INCLUDING SAME**

(30) Priority: 05.07.2024 KR 20240089194; 18.06.2025 KR 20250080449
(71) Applicant: LG Energy Solution, Ltd., Seoul 07335 (KR)
(72) Inventor: KO, Kwang-Hun, Daejeon 34122 (KR); HWANG, Dong-Sung, Daejeon 34122 (KR); KIM, Geon-Guk, Daejeon 34122 (KR); CHOI, Hyeon-Woo, Daejeon 34122 (KR)
(74) Representative: Goddar, Heinz J.
(86) International application number: PCT/KR2025/009347
(87) International publication number: WO 2026/010329

(57) **Abstract**

A battery according to the present disclosure may include: an electrode assembly configured by winding a first electrode and a second electrode with a separator interposed therebetween around a central axis of a central winding hole; a cell housing configured to store the electrode assembly and having an opening on one side; and a current collector electrically connected to the electrode assembly and the cell housing, respectively, and having a peripheral portion on its edge, wherein the peripheral portion may include a rigidity reinforcement portion configured to reinforce rigidity of the peripheral portion.

## Description

### TECHNICAL FIELD

The present disclosure relates to a battery and battery pack, and a vehicle including the same and, more specifically, to a battery and battery pack including a current collector capable of effectively preventing deformation, and a vehicle including the same.

This application is based on and claims priority from Korean Patent Application No. 10-2024-0089194, filed on July 05, 2024, and Korean Patent Application No. 10-2025-0080449, filed on June 18, 2025, with the Korean Intellectual Property Office, the disclosure of which is incorporated herein in its entirety by reference.

### BACKGROUND ART

Recently, the demand for portable electronic products such as laptops, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway

Currently commercialized secondary batteries include nickel-cadmium batteries, nickel-metal hydride batteries, nickel-zinc batteries, and lithium-ion secondary batteries. Among them, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. These lithium-ion secondary batteries are assembled into a compact structure by overlapping or stacking multiple battery cells themselves or multiple battery cells mounted in cartridges, and then the structures are electrically connected to configure a battery module or battery pack.

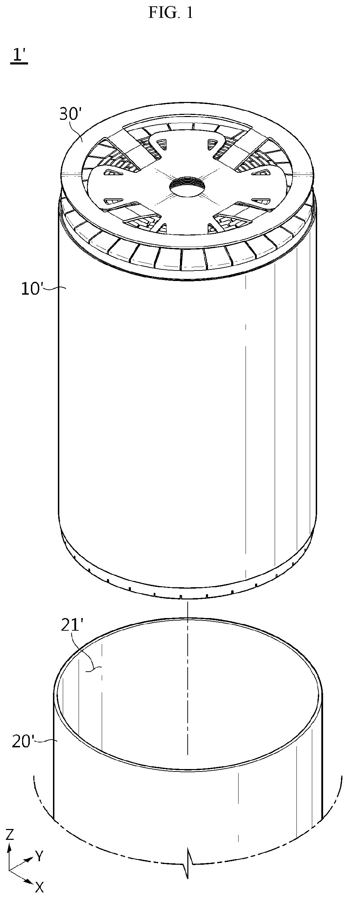

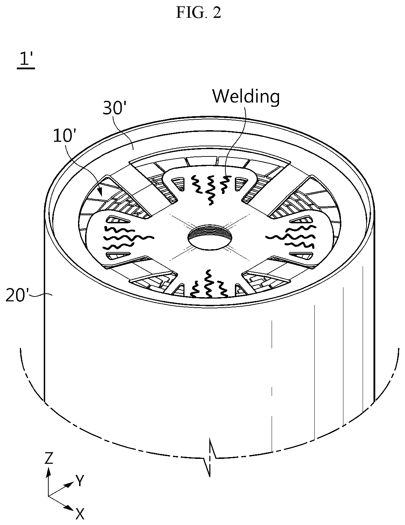

FIG. 1 is a drawing illustrating a conventional battery before an electrode assembly having a current collector coupled thereto is inserted and coupled to a cell housing, and FIG. 2 is a drawing illustrating a conventional battery after an electrode assembly having a current collector coupled thereto is inserted and coupled to a cell housing.

Referring to FIGS. 1 and 2, a cylindrical battery 1' may include a current collector 30'. The current collector 30' may be connected to the negative electrode of an electrode assembly 10' and a metal can 20' (cell housing). The cylindrical battery 1' including the current collector 30' may be manufactured by connecting the current collector 30' to the electrode assembly 10', inserting the electrode assembly 10' coupled with the current collector 30' into the metal can 20', and connecting them.

It may be important that the current collector 30' and the electrode assembly 10' be connected so as to be concentric with each other. If the center of the current collector 30' and the center of the electrode assembly 10' are significantly misaligned with each other, the current collector 30' may get caught on the metal can 20' when the electrode assembly 10' is inserted into the metal can 20', making the insertion difficult. Even if the current collector 30' and electrode assembly 10' are forcibly inserted into the metal can 20', the current collector 30', the electrode assembly 10', or the metal can 20' may be unintentionally deformed. In addition, if the outer circumference of the current collector 30' and the inner wall of the metal can 20' do not exactly meet, the welding joint between the current collector 30' and the metal can 20' may become impossible. Nevertheless, it is very difficult to precisely align the centers of the current collector 30' and the electrode assembly 10' with each other in the process.

Therefore, it is urgent to devise a method capable of preventing deformation of the current collector and securely welding the current collector to the metal can even when the current collector and the electrode assembly are inserted into the cell housing while being eccentric to each other.

### DISCLOSURE

### Technical Problem

The present disclosure is designed to solve the problems of the related art, and therefore the present disclosure is directed to providing a battery and battery pack capable of effectively preventing deformation of the current collector even when the current collector and the electrode assembly are inserted into the cell housing while being eccentric to each other, and a vehicle including the same.

In addition, the present disclosure is also to provide a battery and battery pack enabling the current collector to be in exact contact with the cell housing even when the current collector and the electrode assembly are eccentric to each other, so that the current collector can be effectively coupled to the cell housing.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly configured by winding a first electrode and a second electrode with a separator interposed therebetween around a central axis of a central winding hole; a cell housing configured to store the electrode assembly and having an opening on one side; and a current collector electrically connected to the electrode assembly and the cell housing, respectively, and having a peripheral portion on its edge, wherein the peripheral portion may include a rigidity reinforcement portion configured to reinforce rigidity of the peripheral portion.

The current collector may have an electrode-coupling portion coupled to the electrode assembly, and the electrode-coupling portion may be indirectly connected to the peripheral portion.

The current collector may further include a bridge configured to connect the peripheral portion and the electrode-coupling portion to each other.

The peripheral portion may be welded to the cell housing.

The peripheral portion may have a continuous shape along the edge of the current collector.

The peripheral portion may have an annular shape.

A cross-section of at least a portion of the rigidity reinforcement portion may extend in a direction different from a direction perpendicular to the central axis of the central winding hole.

The rigidity reinforcement portion may include an outer reinforcement portion disposed on an outer side of the peripheral portion and extending in a direction parallel to the central axis of the central winding hole.

The rigidity reinforcement portion may include an inner reinforcement portion disposed on an inner side of the peripheral portion and extending in a direction other than a direction perpendicular to the central axis of the central winding hole.

The rigidity reinforcement portion may include a flat portion extending in a direction perpendicular to the central axis of the central winding hole.

The rigidity reinforcement portion may include an inclined portion extending inward so as to be inclined in a direction away from the electrode assembly.

The rigidity reinforcement portion may include a protrusion protruding in a direction parallel to the central axis of the central winding hole.

The rigidity reinforcement portion may include a bent portion having a shape that is bent multiple times.

In another aspect of the present disclosure, there is provided a battery pack including at least one battery according to the present disclosure.

In another aspect of the present disclosure, there is provided a vehicle including at least one battery pack according to the present disclosure.

### Advantageous Effects

According to the present disclosure, it is possible to provide a battery and a battery pack capable of effectively preventing, by providing a rigidity reinforcement portion to a peripheral portion of a current collector, deformation of the current collector even when the current collector and the electrode assembly are inserted into the cell housing while being eccentric to each other, and a vehicle including the same.

In addition, according to one aspect of the present disclosure, it is possible to provide a battery and a battery pack, which include a rigidity reinforcement portion provided in a peripheral portion of a current collector and bring the current collector into precise contact with the cell housing even when the current collector and the electrode assembly are eccentric to each other, so that the current collector can be effectively coupled to the cell housing, and a vehicle including the same.

In addition, according to one aspect of the present disclosure, it is possible to provide a battery and battery pack with improved quality, and a vehicle including the same.

In addition, according to one aspect of the present disclosure, it is possible to provide a battery and battery pack with improved productivity, and a vehicle including the same.

In addition, according to one aspect of the present disclosure, it is possible to provide a battery and battery pack with improved electrical stability, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a conventional battery before an electrode assembly having a current collector coupled thereto is inserted and combined into a cell housing.
FIG. 2 is a drawing illustrating a conventional battery after an electrode assembly having a current collector coupled thereto is inserted and combined into a cell housing.
FIG. 3 is an overall perspective view illustrating a battery according to an embodiment of the present disclosure.
FIG. 4 is an overall cross-sectional view of a battery according to an embodiment of the present disclosure.
FIG. 5 is a perspective view of a current collector according to an embodiment of the present disclosure.
FIG. 6 is a plan view of a current collector according to an embodiment of the present disclosure.
FIG. 7 is a partially enlarged cross-sectional view of a battery according to an embodiment of the present disclosure.
FIG. 8 is a perspective view of a current collector according to another embodiment of the present disclosure.
FIG. 9 is a partially enlarged cross-sectional view of a battery according to another embodiment of the present disclosure.
FIG. 10 is a cross-sectional view illustrating a rigidity reinforcement portion of a current collector according to another embodiment of the present disclosure.
FIG. 11 is a cross-sectional view illustrating a rigidity reinforcement portion of a current collector according to a modification of another embodiment of the present disclosure.
FIG. 12 is a drawing illustrating a battery pack according to an embodiment of the present disclosure.
FIG. 13 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In this specification, unless stated otherwise, the X-axis direction and the Y-axis direction may be a left-right direction and a front-back direction, or a front-back direction and a left-right direction, respectively, and the Z-axis direction perpendicular to the X-Y plane may be an up-down direction (vertical direction).

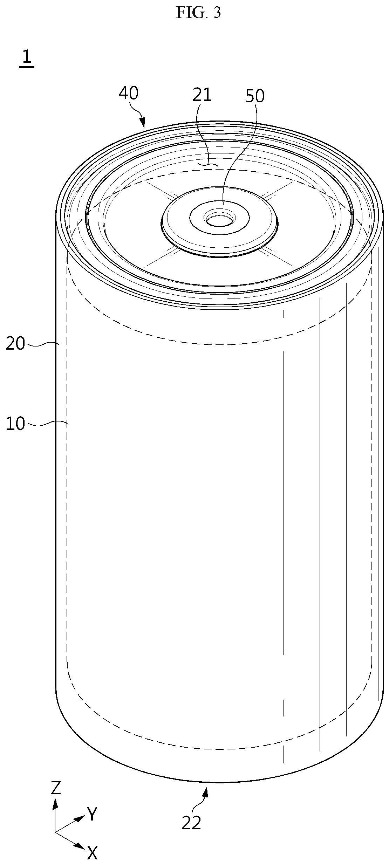

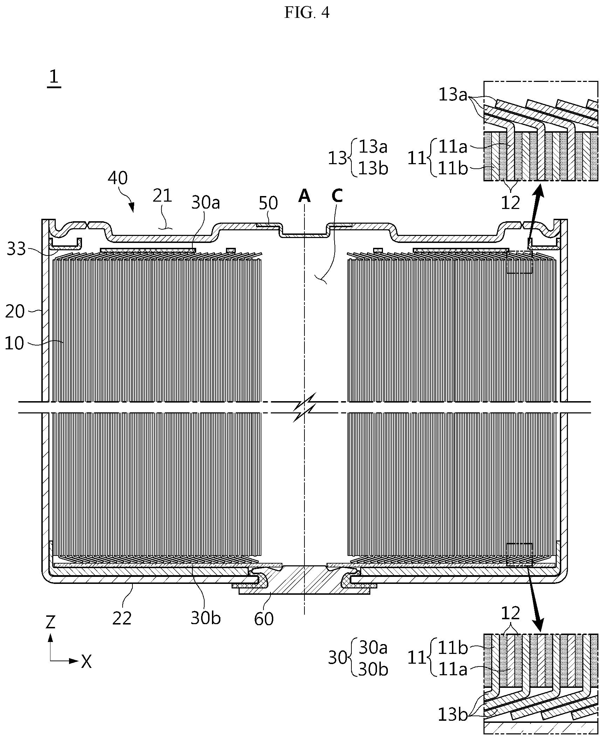

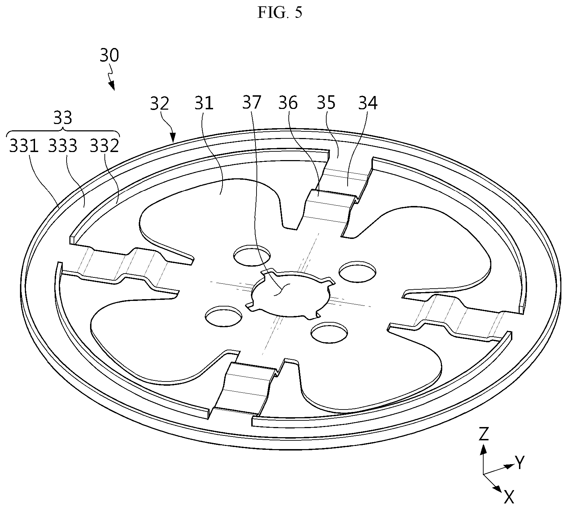

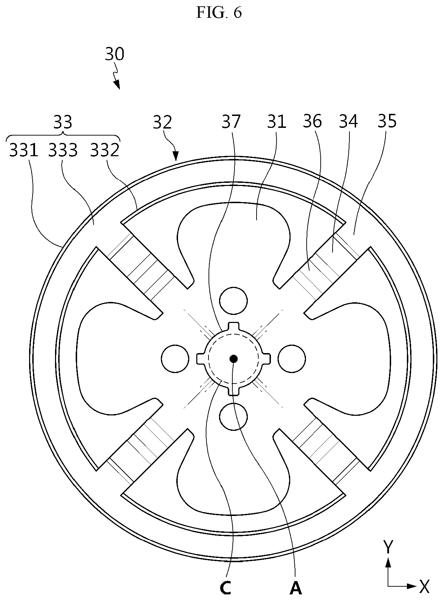

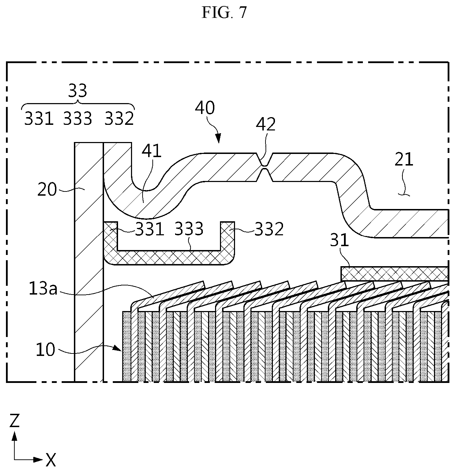

FIG. 3 is an overall perspective view illustrating a battery according to an embodiment of the present disclosure, FIG. 4 is an overall cross-sectional view of a battery according to an embodiment of the present disclosure, FIG. 5 is a perspective view of a current collector according to an embodiment of the present disclosure, FIG. 6 is a plan view of a current collector according to an embodiment of the present disclosure, and FIG. 7 is a partially enlarged cross-sectional view of a battery according to an embodiment of the present disclosure.

Hereinafter, a battery 1 according to an embodiment of the present disclosure will be described in detail with reference to FIGS. 3 to 7. The battery 1 according to an embodiment of the present disclosure may include an electrode assembly 10, a cell housing 20, and a current collector 30.

The battery 1 may be a secondary battery configured to be capable of charging and discharging. The battery 1 may be a cylindrical battery.

The electrode assembly 10 may include electrodes 11 and a separator 12. The electrodes 11 may have different polarities. Specifically, the electrodes 11 may include a first electrode 11a and a second electrode 11b. The first electrode 11a may have a first polarity, and the second electrode 11b may have a second polarity opposite the first polarity. For example, the first polarity may be a negative electrode and the second polarity may be a positive electrode. The separator 12 may be interposed between electrodes 11 of different polarities. The separator 12 may be interposed between the first electrode 11a and the second electrode 11b. The separator 12 may be an insulator.

The electrode assembly 10 may have a jelly-roll structure. That is, the electrode assembly 10 may be manufactured by winding a laminate formed by stacking at least once the first electrode 11a and the second electrode 11b in the form of sheets with the separator 12 interposed therebetween around the central winding hole C. Any structure known as a jelly-roll structure in the art may be applied without limitation to the present disclosure.

The electrode 11 may include a conductive metal material. For example, the electrode 11 may include one of copper (Cu) and aluminum (Al). In particular, the first electrode 11a may include copper, and the second electrode 11b may include aluminum.

Each electrode 11 may have a coated portion and an uncoated portion. The coated portion may be a portion on which an active material layer is coated on at least one surface of the electrode 11. For example, a negative electrode active material may be coated on the coated portion of the first electrode 11a, and a positive electrode active material may be coated on the coated portion of the second electrode 11b.

The uncoated portion may be a portion of the electrode 11 on which the active material is not coated. The electrode 11 may have a predetermined length and width, and the uncoated portion may be formed on one long side of the electrode 11.

At least a portion of the uncoated portion may be exposed to the outside of the separator 12. The uncoated portion may be used as a tab of the electrode 11.

The electrode 11 may have a plurality of foil tabs 13. The plurality of foil tabs 13 may be provided on the uncoated portion. The foil tabs 13 may be exposed to the outside of the separator 12. The plurality of foil tabs 13 may be arranged in a row from the central winding hole C toward the outer circumference. The plurality of foil tabs 13 may be formed by one or more notched parts formed by a notching process.

Among the foil tabs 13, the foil tab 13 of the first electrode 11a may be referred to as a first foil tab 13a, and the foil tab 13 of the second electrode 11b may be referred to as a second foil tab 13b. The first foil tabs 13a may be disposed at the top (e.g., +Z-axis direction end) of the electrode assembly 10, and the second foil tabs 13b may be disposed at the bottom (e.g., -Z-axis direction end) of the electrode assembly 10.

The electrode 11 may have an insulating coating portion. The insulating coating portion may be disposed at the boundary between the uncoated portion and the coated portion. The insulating coating portion may be provided in a case where the electrode 11 is the second electrode 11b so as to prevent the coated portions of the second electrode 11b and the first electrode 11a from coming into contact with each other.

The cell housing 20 may be configured to store the electrode assembly 10. The cell housing 20 may have a storage space in which the electrode assembly 10 is stored. The cell housing 20 may be configured in a cylindrical shape with a hollow space to store, for example, the electrode assembly 10 therein. The cell housing 20 may include a conductive metal material.

The cell housing 20 may have an opening 21 formed on one side. The electrode assembly 1 may be stored in the cell housing 20 through the opening 21. The opening 21 may be provided, for example, at the top of the cell housing 20.

The cell housing 20 may have a closed portion 22 formed on the other side or on the opposite side of the opening 21. The closed portion 22 will be described in more detail later.

The current collector 30 may be electrically connected to the electrode assembly 10. The current collector 30 may be electrically connected to the electrode 11 of the electrode assembly 10. The current collector 30 may be welded to the foil tabs 13.

The current collector 30 may include a first current collector 30a and a second current collector 30b. The first current collector 30a may be electrically connected to the first electrode 11a. The first current collector 30a may be welded to the first foil tabs 13a. The first current collector 30a may be a negative-electrode current collector 30.

The second current collector 30b may be electrically connected to the second electrode 11b. The second current collector 30b may be welded to the second foil tabs 13b. The second current collector 30b may be a positive-electrode current collector 30.

The following description of the current collector 30 may be commonly applied to both the first current collector 30a and the second current collector 30b, unless otherwise specified.

The current collector 30 may be electrically connected to the cell housing 20. The current collector 30 may be welded to the cell housing 20. The current collector 30 may be electrically disposed between the cell housing 20 and the electrode assembly 10.

Only one of the first current collector 30a and the second current collector 30b may be electrically connected to the cell housing 20. For example, the first current collector 30a may be electrically connected to the cell housing 20, whereas the second current collector 30b and the cell housing 20 may be insulated from each other by a configuration such as an insulator. In this case, the cell housing 20 may have the first polarity.

The current collector 30 may have a peripheral portion 32. The peripheral portion 32 may be provided at the edge of the current collector 30.

The peripheral portion 32 may be electrically connected to the cell housing 20. That is, the peripheral portion 32 may be a portion of the current collector 30, which is electrically connected to the cell housing 20. For example, the outer side of the peripheral portion 32 may be connected to the inner surface of the cell housing 20.

The current collector 30 may have overall rigidity secured by the peripheral portion 32.

The peripheral portion 32 may have a rigidity reinforcement portion 33. The rigidity reinforcement portion 33 may be configured to reinforce the rigidity of the peripheral portion 32. The current collector 30 may secure overall rigidity by the peripheral portion 32, and the peripheral portion 32 may have its rigidity reinforced by the rigidity reinforcement portion 33, so that the current collector 30 may have strong rigidity secured by the rigidity reinforcement portion 33.

According to the implemented configuration of the present disclosure, even if the current collector 30 and the electrode assembly 10 are connected to the cell housing 20 while they are connected to be eccentric to each other, deformation of the current collector 30 may be effectively prevented. Specifically, in a case where the current collector 30 and the electrode assembly 10 are coupled so that the center of the current collector 30 and the center of the electrode assembly 10 do not match each other, and where the coupled current collector 30 and electrode assembly 10 are inserted into the cell housing 20, unlike the current collector 30' of the conventional battery 1', since the rigidity of the peripheral portion 32 is reinforced by the rigidity reinforcement portion 33, deformation of the peripheral portion 32 may be effectively prevented, thereby effectively preventing deformation of the current collector 30.

In addition, according to the above-implemented configuration of the present disclosure, even if the current collector 30 is provided to be eccentric to the electrode assembly 10, the current collector 30 may come into exact contact with the cell housing 20, and thus the current collector 30 and the cell housing 20 may be effectively coupled.

Accordingly, it is possible to provide a battery 1 with improved quality. In addition, since the alignment between the current collector 30 and the cell housing 20 may be allowed within a relatively wide error range, the productivity of the battery 1 may be improved.

In addition, since the current collector 30 may be effectively coupled to the electrode assembly 10 and the cell housing 20 while preventing its deformation, the stable electrical connection of the current collector 30 may be obtained, so that the electrical stability of the battery 1 may be improved.

The current collector 30 may include an electrode-coupling portion 31. The electrode-coupling portion 31 may be coupled to the electrode assembly 10. That is, in the current collector 30, the electrode-coupling portion 31 may be a portion that is to be coupled to the electrode assembly 10. The electrode-coupling portion 31 may be coupled to the foil tab 13 of the electrode 11. The electrode-coupling portion 31 may be electrically connected to the foil tab 13 in a surface contact state. The electrode-coupling portion 31 may be welded to the foil tab 13.

In the above and below, welding may be understood as, for example, any one of laser welding, spot welding, and ultrasonic welding.

The electrode-coupling portion 31 may be indirectly connected to the peripheral portion 32. That is, the electrode-coupling portion 31 and the peripheral portion 32 may be configured to be connected to each other via another configuration interposed between the electrode-coupling portion 31 and the peripheral portion 32, instead of being directly connected to each other. As a result, in the current collector 30, the electrode-coupling portion 31 and the peripheral portion 32 may be spaced apart from each other so that an empty space is formed between them in at least some area. The electrode-coupling portion 31 and the peripheral portion 32 may be indirectly connected to each other, for example, by a bridge 34, which will be described later.

The electrode-coupling portion 31 may be disposed inward from the peripheral portion 32. For example, the electrode-coupling portion 31 may be disposed inward from the peripheral portion 32 in the radial direction. For example, the electrode-coupling portion 31 may occupy approximately the central part of the current collector 30 disposed inward from the peripheral portion 32.

As described above, when the electrode-coupling portion 31 is indirectly connected to the peripheral portion 32, interference between the electrode-coupling portion 31 and the peripheral portion 32 may be effectively prevented during the assembly process of the battery 1. Specifically, when the current collector 30 and the electrode assembly 10 are inserted and coupled to the cell housing 20 while they are coupled to be eccentric to each other, the peripheral portion 32 and the electrode-coupling portion 31 are likely to interfere with each other when the current collector 30 is deformed due to the pressure of the cell housing 20. However, when the electrode-coupling portion 31 is indirectly connected to the peripheral portion 32 as described above, a change in the relative position of the peripheral portion 32 and the electrode-coupling portion 31 is allowed to some extent, so that interference between the electrode-coupling portion 31 and the peripheral portion 32 may be effectively prevented.

The electrode-coupling portion 31 may be configured as a single configuration of the current collector 30.

A hollow hole 37 may be formed in the central portion of the current collector 30 or the central portion of the electrode-coupling portion 31. The hollow hole 37 may be configured such that an electrolyte may be injected into the interior of the electrode assembly 10 therethrough.

The current collector 30 may further include a bridge 34. The bridge 34 may be configured to connect the peripheral portion 32 and the electrode-coupling portion 31 to each other.

The bridge 34 may be located between the peripheral portion 32 and the electrode-coupling portion 31. At least one bridge 34 may be provided. A plurality of bridges 34 may be provided. For example, the current collector 30 may include four bridges 34 as shown in the drawing. The bridges 34 may be configured to be radially and rotationally symmetrical in the current collector 30.

The bridges 34 may extend to both the peripheral portion 32 and the electrode-coupling portion 31. For example, the bridge 34 may extend from one of the peripheral portion 32 and the electrode-coupling portion 31 to the other. For example, the bridge 34 may extend along the radial direction.

As described above, when the current collector 30 includes the bridge 34, the peripheral portion 32 and the electrode-coupling portion 31 may be effectively and indirectly connected to each other by the bridge 34, instead of being directly connected to each other. In addition, when the current collector 30 and the electrode assembly 10 are inserted and coupled to the cell housing 20 while they are coupled to be eccentric to each other, even if the peripheral portion 32 is pressurized by the cell housing 20, the peripheral portion 32 and the electrode-coupling portion 31 may not be deformed, and only the bridge 34 may be deformed.

The bridge 34 of the current collector 30 may have a variable portion 36. The variable portion 36 may be configured such that the length of the bridge 34 is variable. Specifically, the variable portion 36 may be configured to be compressed or expanded when force is applied to the bridge 34 in a direction parallel to the longitudinal direction of the bridge 34, and as a result, the length of the bridge 34 may be reduced or increased. The variable portion 36 may be configured, for example, in a convex and/or concave shape or a bent shape.

The peripheral portion 32 may be spaced apart from the electrode assembly 10. That is, the peripheral portion 32 and the electrode-coupling portion 31 may have a height difference in the Z-axis direction. The current collector 30 may have a bending portion 35. The bending portion 35 may be formed at a boundary between the peripheral portion 32 and the bridge 34. The bending portion 35 may be configured to be bent from the peripheral portion 32 to the bridge 34. The bending portion 35 may be configured to connect the peripheral portion 32 and the bridge 34, which have a height difference.

The peripheral portion 32 may be welded to the cell housing 20. Specifically, the outer side of the peripheral portion 32 may be welded to the inner surface of the cell housing 20. The outer side of the peripheral portion 32 and the inner surface of the cell housing 20 may come into face-to-face contact and then welded to each other.

When the current collector 30 is configured as described above, not only may it be effectively positioned and fixed to the cell housing 20, but also the conductive area between the current collector 30 and the cell housing 20 may be stably secured, thereby improving the electrical stability of the battery 1.

In a case where the current collector 30 has both the peripheral portion 32 and the electrode-coupling portion 31, connection between the current collector 30 and the cell housing 20 and connection between the current collector 30 and the electrode assembly 10 may be performed, respectively, by separate welding processes, thereby preventing double welding of either the peripheral portion 32 or the electrode-coupling portion 31.

The peripheral portion 32 may have a continuous shape along the edge of the current collector 30. For example, the peripheral portion 32 may be configured in a continuous shape in the circumferential direction along the edge of the current collector 30.

The peripheral portion 32 may be configured in, for example, an annular or ring shape. In this regard, the cell housing 20 may be configured in the shape of a cylindrical can having a circular cross-section. The radius of the outer circumference of the peripheral portion 32 may be approximately identical to the radius of the inner circumference of the cell housing 20.

When the current collector 30 is configured in this manner, the overall rigidity of the current collector 30 may be further secured.

In the peripheral portion 32, a cross-section of at least a portion of the rigidity reinforcement portion 33 may extend in a direction different from the direction perpendicular to the central axis A of the central winding hole C. For example, a cross-section of at least a portion of the rigidity reinforcement portion 33 may extend in a direction different from the Z-axis direction.

In this case, the peripheral portion 32 may effectively distribute the stress in the horizontal direction or in the direction parallel to the X-Y plane, thereby more effectively reinforcing the rigidity of the peripheral portion 32.

The rigidity reinforcement portion 33 may include an outer reinforcement portion 331.

The outer reinforcement portion 331 may be disposed on the outer side of the peripheral portion 32. For example, the outer reinforcement portion 331 may be disposed on the radially outer side of the peripheral portion 32.

The outer reinforcement portion 331 may extend in a direction parallel to the central axis A of the central winding hole C. For example, as shown in FIG. 5 and FIG. 7, the outer reinforcement portion 331 may extend in the Z-axis direction.

The outer reinforcement portion 331 may extend along the circumferential direction. The outer reinforcement portion 331 may be configured in a continuous form.

The outer reinforcement portion 331 may be coupled to the cell housing 20. For example, the radially outer surface of the outer reinforcement portion 331 may be welded to the inner surface of the cell housing 20 while being in surface contact with each other.

In a case where the rigidity reinforcement portion 33 includes the outer reinforcement portion 331, the rigidity of the outer side of the peripheral portion 32 may be reinforced more effectively. In addition, the bonding force between the peripheral portion 32 and the cell housing 20 may be improved.

The rigidity reinforcement portion 33 may include an inner reinforcement portion 332.

The inner reinforcement portion 332 may be disposed on the inner side of the peripheral portion 32. For example, the inner reinforcement portion 332 may be disposed on the radially inner side of the peripheral portion 32.

The inner reinforcement portion 332 may extend in a direction different from the direction perpendicular to the central axis A of the central winding hole C. For example, as illustrated in FIGS. 5 and 7, the inner reinforcement portion 332 may extend in the Z-axis direction. In addition, unlike as illustrated in FIGS. 5 and 7, the inner reinforcement portion 332 may be configured to be inclined in a direction other than the horizontal direction (X-axis and Y-axis directions).

The inner reinforcement portion 332 may extend in the circumferential direction. The inner reinforcement portion 332 may be configured in a discontinuous form. For example, the inner reinforcement portion 332 may be provided only in a portion excluding the bridge 34.

In a case where the rigidity reinforcement portion 33 includes the inner reinforcement portion 332, the rigidity of the inner side of the peripheral portion 32 may be more effectively reinforced.

The rigidity reinforcement portion 33 may have a flat portion 333.

The flat portion 333 may extend in a direction perpendicular to the central axis A of the central winding hole C. For example, as shown in FIGS. 5 and 7, the flat portion 333 may extend in a direction parallel to the X-Y plane.

The flat portion 333 may face the electrode assembly 10. The flat portion 333 may be spaced apart from the electrode assembly 10.

In a case where the rigidity reinforcement portion 33 includes the flat portion 333, the stress in the horizontal direction or the X-Y plane direction may be effectively distributed.

In a case where the rigidity reinforcement portion 33 includes all of the flat portion 333, the outer reinforcement portion 331, and the inner reinforcement portion 332 described above, the cross section of the peripheral portion 32 or the rigidity reinforcement portion 33 may have an approximately U-shape.

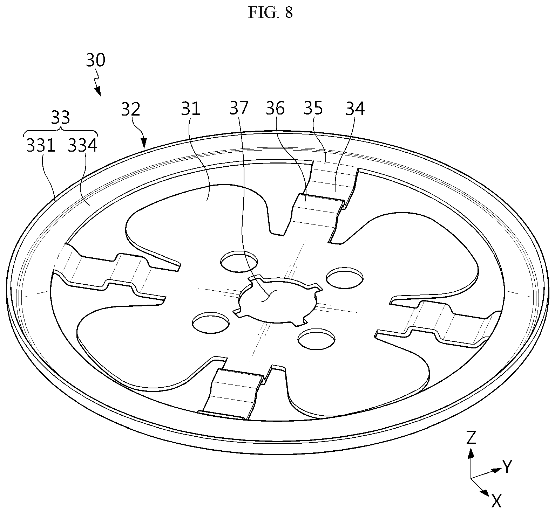

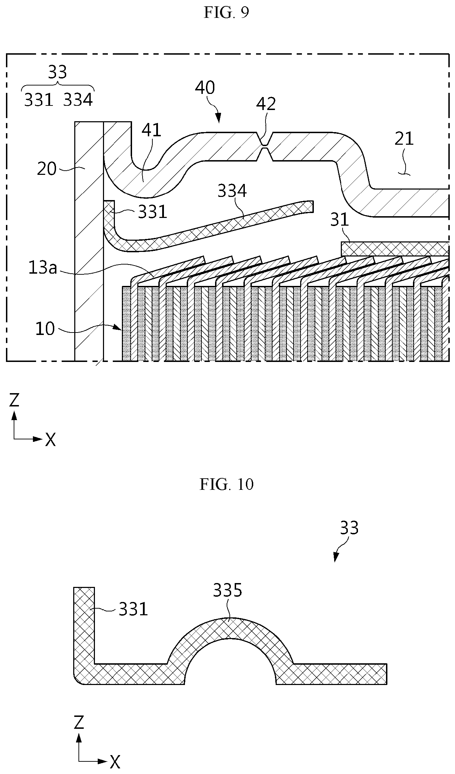

FIG. 8 is a perspective view of a current collector 30 according to another embodiment of the present disclosure, and FIG. 9 is a partially enlarged cross-sectional view of a battery 1 according to another embodiment of the present disclosure.

Hereinafter, the battery 1 according to another embodiment of the present disclosure will be described in detail with reference to FIGS. 8 and 9. In the battery 1 according to another embodiment of the present disclosure, the rigidity reinforcement portion 33 may include an inclined portion 334.

The inclined portion 334 may be configured in an inclined shape. Specifically, the inclined portion 334 may extend inward so as to be inclined in a direction away from the electrode assembly 10. For example, the inclined portion 334 may extend inward along the radial direction so as to be inclined in a direction away from the electrode assembly 10 along the Z-axis direction. The inclination angle of the inclined portion 334 may be formed to be, for example, about 45 degrees or less relative to the horizontal direction (parallel to the X-Y plane), but the inclination angle of the inclined portion 334 is not limited thereto.

Since the battery 1 according to another embodiment of the present disclosure is configured such that the rigidity reinforcement portion 33 includes the inclined portion 334, the stress that may be applied to the peripheral portion 32 may be effectively distributed in the vertical direction (for example, the Z-axis direction) and the horizontal direction (for example, the direction parallel to the X-Y plane).

An outer reinforcement portion 331 having the same or similar shape as that described above may be disposed on the outer side of the inclined portion 334.

The current collector 30 of the battery 1 according to another embodiment of the present disclosure may also have a bending portion 35. Here, the bending portion 35 according to another embodiment of the present disclosure may be configured to extend from the upper end of the inclined portion 334, thereby being configured to correspond to a greater height difference than the bending portion 35 according to an embodiment of the present disclosure.

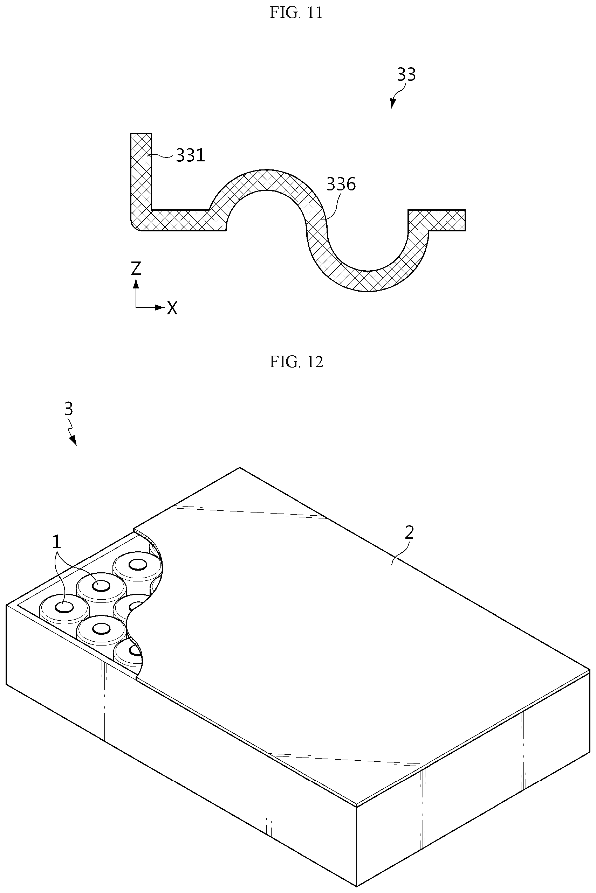

FIG. 10 is a cross-sectional view illustrating a rigidity reinforcement portion 33 of a current collector 30 according to another embodiment of the present disclosure, and FIG. 11 is a cross-sectional view illustrating a rigidity reinforcement portion 33 of a current collector 30 according to a modification of another embodiment of the present disclosure.

FIG. 10 and FIG. 11 show cross-sectional views of rigidity reinforcement portions 33 of current collectors 30, respectively, according to another embodiment of the present disclosure and a modification thereof.

Hereinafter, a battery 1 according to another embodiment of the present disclosure will be described in detail with reference to FIG. 10 and FIG. 11.

Referring to FIG. 10, in the battery 1 according to another embodiment of the present disclosure, the rigidity reinforcement portion 33 may have a protrusion 335.

The protrusion 335 may have a protruding shape. Specifically, based on the cross-section, the protrusion 335 may protrude in a direction parallel to the central axis A of the central winding hole C.

The protrusion 335 may be formed partially and discontinuously along the circumferential direction of the rigidity reinforcement portion 33, or may be formed entirely and continuously along the circumferential direction.

The protrusion 335 may be disposed between the outer end and the inner end of the rigidity reinforcement portion 33. Specifically, the protrusion 335 may be disposed between the radially outer end and the radially inner end of the rigidity reinforcement portion 33.

Referring to FIG. 11, in the battery 1 according to a modification of another embodiment of the present disclosure, the rigidity reinforcement portion 33 may include a bent portion 336.

The bent portion 336 may have a shape that is bent multiple times. Specifically, based on the cross section, the bent portion 336 may be configured in a shape that is bent multiple times. For example, the bent portion 336 may have a part that protrudes in the +Z direction and another part that protrudes in the -Z direction.

The bent portion 336 may be formed partially and discontinuously along the circumferential direction of the rigidity reinforcement portion 33, or may be formed entirely and continuously along the circumferential direction.

The bent portion 336 may be disposed between the outer end and the inner end of the rigidity reinforcement portion 33. Specifically, the bent portion 336 may be disposed between the radially outer end and the radially inner end of the rigidity reinforcement portion 33.

The rigidity reinforcement portion 33 according to the present disclosure may be configured in various shapes, similar to the embodiments illustrated in FIGS. 10 and 11.

In a case where the rigidity reinforcement portion 33 includes the protrusion 335 or the bent portion 336, the rigidity reinforcement effect of the peripheral portion 32 of the rigidity reinforcement portion 33 may be further improved.

The rigidity reinforcement portion 33 may have the outer reinforcement portion 331 described above. In addition, the rigidity reinforcement portion 33 may also have the inner reinforcement portion 332 described above. Furthermore, the rigidity reinforcement portion 33 may also have the inclined portion 334 described above.

Referring back to FIGS. 3, 4, 7 and 9, the battery according to the present disclosure may further include a can lid 40.

The can lid 40 may be coupled to the end of the opening 21 side of the cell housing 20. That is, the can lid 40 may be coupled to one end of the cell housing 20 where the opening 21 is formed. The can lid 40 may be configured to cover the opening 21. The can lid 40 may be disposed at the outermost side of the cell housing 20 and may form a part of the exterior of the battery 1.

The can lid 40 may be fitted to the end of the opening 21 side of the cell housing 20. The can lid 40 may have an edge 41. The edge 41 may be provided along the perimeter of the can lid 40, and may have a U-shaped cross-section. The edge 41 may be forcibly fitted to the end of the opening 21 side of the cell housing 20. The edge 41 may be welded to the end of the opening 21 side of the cell housing 20 while being forcibly fitted thereto.

Alternatively, the can lid 40 may be coupled to the end of the cell housing 20 while resting on the opening 21. Unlike what is shown in the drawings, the can lid 40 may have a butt portion configured to rest on the end of the opening 21 side of the cell housing 20. The butt portion may be welded to the end of the opening 21 side of the cell housing 20 in the resting state.

The current collector 30 may be located between the can lid 40 and the electrode assembly 10. The can lid 40 may cover the current collector 30.

A vent notch 42 may be provided in the can lid 40. The vent notch 42 may be formed by notching such that it is to be broken when the internal pressure of the battery 1 reaches a predetermined level or higher.

A liquid inlet may be formed in the can lid 40 so that it is open to be exposed to the outside. The liquid inlet may be configured so that an electrolyte is injected to the interior of the battery 1. A plug 50 may be coupled to the can lid 40, and the plug 50 may be configured to cover the liquid inlet.

In a case where the battery 1 includes the can lid 40, there is an advantage in that the electrode assembly 10 and the current collector 30 may be firmly and stably fixed even without configurations such as a beading portion and a crimping portion.

Referring back to FIGS. 3 and 4, the battery 1 according to the present disclosure will be described in more detail.

The cell housing 20 may have a closed portion 22. The closed portion 22 may be formed on the other side of the cell housing 20 or the lower side thereof (in the -Z-axis direction). The closed portion 22 may be configured in a closed form. A terminal 60 may be disposed in the closed portion 22. The terminal 60 may be configured to pass through the closed portion 22 such that at least a portion thereof is exposed to the outside. The terminal 60 may be provided in the form of a rivet. The terminal 60 may be electrically connected to the second electrode 11b, and may have the second polarity. The terminal 60 may be coupled to the second current collector 30b by welding or the like. The terminal 60 may be configured as a positive electrode terminal 60.

The closed portion 22 may have the first polarity. As described above, the cell housing 20 may be electrically connected to the first electrode 11a to have the first polarity. An insulating gasket may be disposed between the closed portion 22 and the terminal 60 to insulate them.

An insulator may be disposed between the closed portion 22 and the second current collector 30b to insulate them. The insulator may be configured to insulate the electrode assembly and the cell housing 20 from each other.

Preferred embodiments of the battery 1 according to the present disclosure have been described above. The technical idea of the present disclosure is not limited to the embodiments, and may encompass a combination thereof.

FIG. 12 is a drawing illustrating a battery pack according to an embodiment of the present disclosure.

Referring to FIG. 12, a battery pack 3 according to the present disclosure may include at least one battery 1 according to the present disclosure. The battery pack 3 may include a pack case 2 that stores one or more batteries 1.

For the convenience of drawing, components such as a busbar for electrical connection of the batteries 1, a cooling unit, and an external terminal are omitted from the drawing. The structure of multiple batteries 1 for manufacturing the battery pack 3 has been described in the embodiments above.

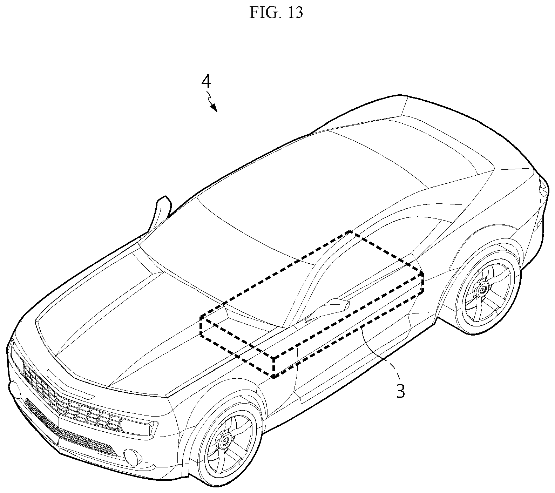

FIG. 13 is a drawing illustrating a vehicle according to an embodiment of the present disclosure.

Referring to FIG. 13, the battery pack 3 according to an embodiment of the present disclosure may be applied to a vehicle 4 such as an electric vehicle or a hybrid vehicle. That is, a vehicle 4 according to the present disclosure may include the battery pack 3 according to the present disclosure. The battery pack 3 may be installed in a body frame under a vehicle seat or in a trunk space. In addition to the battery pack 3, the vehicle 4 according to the present disclosure may further include various other components provided in the vehicle 4. For example, the vehicle 4 according to an embodiment of the present disclosure may further include a car body, a motor, a control device such as an ECU (electronic control unit), or the like, in addition to the battery pack 3 according to the present disclosure.

In addition, that the battery pack 3 according to the present disclosure may also be installed in other devices, apparatuses, and facilities such as an energy storage system using secondary batteries, in addition to the vehicle 4.

Meanwhile, although terms indicating directions such as up and down directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the above-described embodiments should be considered in a descriptive sense rather than a limiting sense. That is, the true scope of the present disclosure is defined by the claims, and all variations within the equivalent scope thereof should be interpreted as being included in the present disclosure.

### [Description of Reference numerals]

1: Battery
2: Pack case
3: Battery pack
4: Vehicle
10: Electrode assembly
11: Electrode
11a: First electrode
11b: Second electrode
12: Separator
13: Foil tab
13a: First foil tab
13b: Second foil tab
20: Cell housing
21: Opening
22: Closed portion
30: Current collector
30a: First current collector
30b: Second current collector
31: Electrode-coupling portion
32: Peripheral portion
33: Rigidity reinforcement portion
331: Outer reinforcement portion
332: Inner reinforcement portion
333: Flat portion
334: Inclined portion
335: Protrusion
336: Bent portion
34: Bridge
35: Bending portion
36: Variable portion
37: Hollow hole
40: Can lid
41: Edge
42: Vent notch
50: Plug
60: Terminal
C: Central winding hole
A: Central axis

## Claims

1. A battery comprising:
an electrode assembly configured by winding a first electrode and a second electrode with a separator interposed therebetween around a central axis of a central winding hole;
a cell housing configured to store the electrode assembly and having an opening on one side; and
a current collector electrically connected to the electrode assembly and the cell housing, respectively, and having a peripheral portion on its edge,
wherein the peripheral portion comprises a rigidity reinforcement portion configured to reinforce rigidity of the peripheral portion.

2. The battery according to claim 1,
wherein the current collector has
an electrode-coupling portion coupled to the electrode assembly, and
wherein the electrode-coupling portion
is indirectly connected to the peripheral portion.

3. The battery according to claim 2,
wherein the current collector further comprises
a bridge configured to connect the peripheral portion and the electrode-coupling portion to each other.

4. The battery according to claim 1,
wherein the peripheral portion
is welded to the cell housing.

5. The battery according to claim 1,
wherein the peripheral portion
has a continuous shape along the edge of the current collector.

6. The battery according to claim 5,
wherein the peripheral portion
has an annular shape.

7. The battery according to claim 1,
wherein a cross-section of at least a portion of the rigidity reinforcement portion extends in a direction different from a direction perpendicular to the central axis of the central winding hole.

8. The battery according to claim 1,
wherein the rigidity reinforcement portion comprises
an outer reinforcement portion disposed on an outer side of the peripheral portion and extending in a direction parallel to the central axis of the central winding hole.

9. The battery according to claim 1,
wherein the rigidity reinforcement portion comprises
an inner reinforcement portion disposed on an inner side of the peripheral portion and extending in a direction other than a direction perpendicular to the central axis of the central winding hole.

10. The battery according to claim 1,
wherein the rigidity reinforcement portion comprises
a flat portion extending in a direction perpendicular to the central axis of the central winding hole.

11. The battery according to claim 1,
wherein the rigidity reinforcement portion comprises
an inclined portion extending inward so as to be inclined in a direction away from the electrode assembly.

12. The battery according to claim 1,
wherein the rigidity reinforcement portion comprises
a protrusion protruding in a direction parallel to the central axis of the central winding hole.

13. The battery according to claim 1,
wherein the rigidity reinforcement portion comprises
a bent portion having a shape that is bent multiple times.

14. A battery pack comprising at least one battery according to any one of claims 1 to 13.

15. A vehicle comprising at least one battery pack according to claim 14.
